Europäisches Patentamt

European Patent Office

Office européen des brevets

(11) Publication number: 0 489 487 A2

# EUROPEAN PATENT APPLICATION

(21) Application number: 91309083.3

(22) Date of filing: 03.10.91

(51) Int. Cl.5: H02H 7/122, H02M 7/519

(30) Priority: 05.12.90 GB 9026496
19.12.90 GB 9027498

(43) Date of publication of application:
10.06.92 Bulletin 92/24

(84) Designated Contracting States:
BE CH DE ES FR IT LI NL SE

(71) Applicant: Siemens Plessey Electronic
Systems Limited
Oakcroft Road
Chessington, Surrey KT9 1OZ(GB)

(72) Inventor: Scott, Graham Norman
23 Kinchington Road, Carisbrooke
Newport, Isle of Wight PO30 5ST(GB)
Inventor: Burford, Howard Charles
"Wootton Rise", 27 Palmers Road
Wootton, Isle of Wight(GB)
Inventor: Goddard, Alfred Douglas
24 Victoria Road
Cowes, Isle of Wight(GB)

(74) Representative: Allen, Derek
Siemens Group Services Limited,
Intellectual Property Department, Roke
Manor, Old Salisbury Lane
Romsey, Hampshire SO51 0ZN(GB)

(54) Improvements in or relating to electrical supply apparatus.

(57) Electrical supply apparatus including a plurality of switches serially coupled via inductor means to a power source said switches being operated alternately or sequentially to supply power from the power source via a supply circuit to a load and a protection circuit which comprises sensing means operative in dependence upon the voltage developed across each of the switches for initiating operation of a circuit breaker which is effective to decouple the apparatus from the power source if the switches are operated contemporaneously so as to short circuit the power source.

It will be appreciated that when a switch is conductive, a very low voltage will obtain across it. It will also be understood that current build up in the case of a short circuit will be retarded due to the influence of the inductor means which in one embodiment may comprise the inductive element of a tuned circuit. Thus by sensing the conductive states of the switches, conductive states of two or more switches which produce a power source short circuit, can be detected substantially immediately, whereby the circuit breaker can be operated before the current can build up to a damaging level. Thus by sensing voltage conditions which will eventually give rise to a large fault current, protection steps can be taken before the fault current can rise to a damaging level.

Fig.3

EP 0 489 487 A2

This invention relates to electrical supply apparatus and more especially but not exclusively it relates to electrical power supply inverters or the like including overload protection circuitry.

Inverter power supplies and pulse modulator circuits which are arranged to operate from a d.c. supply to produce an a.c. signal or pulses for the purpose of voltage transformation or isolation, often use thyristors or similar switching devices as switching elements. One of the problems with such circuits is that a malfunction causing a change of switching sequence, due for example to interfering electrical signals or sudden load changes, can cause a combination of devices to switch on such that a short circuit is placed across the d.c. supply lines. Since the d.c. supply is a relatively low impedance, very large currents may build up before protective fuses can break the circuit. Even if special fast operating fuses are used, significant energy can pass via a fault into components of the circuit which can consequentially suffer irreparable damage unless very highly rated components are used which naturally increases cost and size of apparatus.

There are also occasions when, due to such malfunctions as described, fuses are blown, preventing damage to other circuit elements but nevertheless representing a severe "nuisance" and reducing equipment availability.

A known technique to minimise energy transfer to a short circuit fault or the like and to reduce or eliminate fuse blowing, is to place a fast operating electronic switch element in the d.c. supply line controlled by load current sensing circuits which cause the switch element to open the circuit rapidly in the event of excessive current flowing. The switch element may be a thyristor for example. Since the switch element takes a finite time to respond to a "switch off" command, typically of the order of 10 microseconds, it will be appreciated that a current significantly larger than an overload current which gave rise to a "switch off" command, may be established before the actual "switch off" occurs, thereby unnecessarily stressing all the components of the circuit containing the fault as well as those of the switch itself.

One object of the present invention is to provide an overload protection circuit for inverters and pulse modulators or the like which will operate in good time.

According to the present invention electrical supply apparatus includes a plurality of switches serially coupled to a power source said switches being operated alternately or sequentially to supply power from the power source via a supply circuit to a load and a protection circuit which comprises sensing means operative in dependence upon the voltage developed across each of the switches for initiating operation of a circuit breaker which is effective to decouple the apparatus from the power source if the switches are operated contemporaneously so as to short circuit the power source.

It will be appreciated that when a switch is conductive, a very low voltage will obtain across it. It will also be understood that current build up in the case of a short circuit will be retarded due to the influence of the inductor means which in one embodiment may comprise the inductive element of a tuned circuit. Thus by sensing the conductive states of the switches, conductive states of two or more switches which produce a power source short circuit, can be detected substantially immediately, whereby the circuit breaker can be operated before the current can build up to a damaging level. Thus by sensing voltage conditions which will eventually give rise to a large fault current, protection steps can be taken before the fault current can rise to a damaging level.

The electrical power supply apparatus may be an inverter or alternatively a modulator circuit, wherein the power source is a d.c. supply, the supply circuit including a transformer, a primary winding of which is fed from the d.c. supply via the switches and a secondary winding of which provides an a.c. output voltage from the apparatus.

The supply circuit may also comprise capacitors which in combination with the inductors which define the inductor means form a tuned circuit arrangement having a resonant frequency chosen in accordance with the frequency of operation of the inverter or modulator.

The switches may comprise thyristors or similar semiconductor switches having control electrodes fed with switching control pulses from a driver circuit.

The thyristors may be gate turn off thyristors.

Each thyristor may be shunted by a diode, the diodes being connected such that their forward current flow direction is opposite to the forward current flow direction through the thyristors shunted.

One embodiment of the invention will now be described by way of example with reference to the accompanying drawings in which:-

Figure 1 is a circuit diagram of a known inverter circuit;

Figure 2 is a somewhat schematic diagram of a known inverter protection circuit; and,

Figure 3 is a circuit diagram of a part of the inverter circuit shown in Figure 1 wherein corresponding parts bear the same numerical designations, combined with a protection circuit operatively associated therewith.

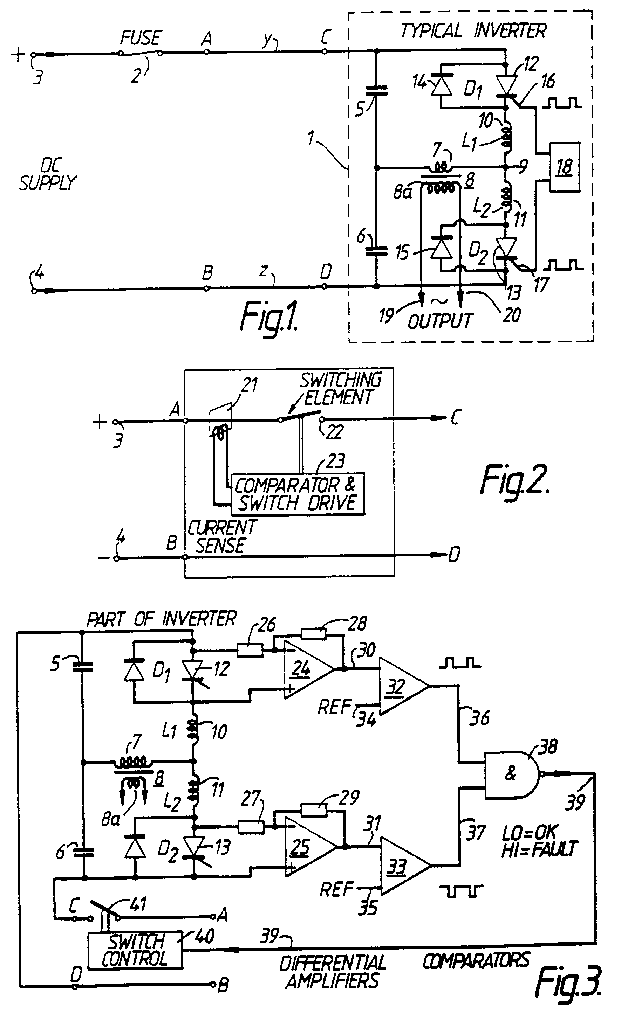

Referring now to Figure 1, an inverter shown within a broken line 1 is coupled via a fuse 2 to the positive and negative terminals 3 and 4 respectively of a d.c. supply.

The inverter as shown within the broken line 1, comprises a pair of capacitors 5 and 6 connected in series across the d.c. supply. A junction between the capacitors 5 and 6 is connected to the primary winding 7 of a transformer 8, the other side of the primary winding remote from the capacitors 5 and 6 being connected to a junction point 9 between a pair of inductors 10 and 11. The inductors 10 and 11 are connected in series with thyristors 12 and 13, the thyristors 12 and 13 and the inductors 10 and 11 being connected in series across the d.c. supply. The thyristors 12 and 13 are shunted by diodes 14 and 15 respectively, the diodes 14 and 15 being connected across the thyristors 12 and 13 respectively in an opposite conductive sense. The thyristors 12 and 13 are provided with control electrodes 16 and 17 respectively which are fed with antiphase switching pulses from a driver circuit 18, whereby the thyristors 12 and 13 are constrained to conduct alternately thereby to provide an a.c. output signal across a pair of output terminals 19 and 20, which are connected to the secondary winding 8a of the transformer 8. Operation of the inverter shown within the broken line 1 and as just before described is conventional and well understood by those skilled in the art, the thyristors 12 and 13 being switched by pulses from the driver circuit 18, which pulses are mutually in antiphase whereby the output voltage across the terminals 19 and 20 is provided at a frequency which is twice the pulse rate of the pulses fed to one or other of the thyristors 12 or 13.

One of the problems with the circuit just before described is that in the presence of power supply perturbations and/or unexpected load variation, instead of conducting alternately as required for normal operation, the thyristors 12 and 13 can sometimes conduct contemporaneously thereby to place a short circuit across the d.c. supply terminals 3 and 4.

In order to detect this fault condition which is sometimes described as 'sit down', known circuit protection arrangements are available of a kind as shown in Figure 2 wherein terminals A, B, C and D, of the arrangement of Figure 2 are connected to the terminals A, B, C and D, as shown in Figure 1 instead of short circuit links y and z, shown therein. The protection circuit of Figure 2 comprises a current sensing coil 21 and a circuit breaker switch 22, the circuit breaker switch 22 being operated under control of a switch driver circuit 23. The switch driver circuit 23 operates to energise the circuit breaker 22 to break the circuit when a predetermined current as sensed by the current coil 21 is exceeded.

One of the problems with this known form of protection circuit is that a significant time must elapse after detection of the overload current by the coil 21 before the circuit breaker can operate. During this time the overload current can build up still further to a point where serious damage may occur to the d.c. supply and/or the inverter thyristor switches 12 and 13.

In order to overcome the problems just before described, a protection arrangement is provided as shown in Figure 3 comprising differential amplifiers 24 and 25 having series resistors 26 and 27 respectively and shunt resistors 28 and 29 respectively. The differential amplifiers 24 and 25 are connected across the thyristors 12 and 13 shown also in Figure 1 such that an output signal on lines 30 and 31 is provided corresponding to the voltage sensed across the thyristors 12 and 13 respectively. The voltages on lines 30 and 31 are fed to comparators 32 and 33 respectively which compare the output voltages from differential amplifiers 24 and 25 respectively with reference voltages on lines 34 and 35 respectively.

Since the thyristors 12 and 13 normally conduct alternately, output signals are provided on lines 36 and 37, from the comparators 32 and 33 respectively, comprising similar pulse trains which are in antiphase with each other. These pulse trains are fed to an 'AND' gate 38 thereby to provide an output signal on line 39 which is fed to a switch control circuit 40.

As hereinbefore explained output signals fed to the 'AND' gate 38 from the comparators 32 and 33 are not normally present contemporaneously, but under fault conditions, when both thyristors 12 and 13 are conductive together, signals will be present contemporaneously on the lines 36 and 37 thereby to produce an output signal on the line 39 which activates the switch control circuit 40 to operate a circuit breaker 41 whereby the inverter apparatus is decoupled from the terminals A and C, as shown in Figure 3, which are connected to the d.c. supply.

It will be appreciated that by sensing the conductive state of the thyristors 12 and 13 in dependence upon the voltage developed across them, the circuit breaker 41 can be operated before current, which is retarded by the inductors 10 and 11, has risen to a damaging level.

A circuit breaker switch incorporated within the circuit breaker 41 is conventionally a thyristor, transistor, or insulated-gate bipolar transistor (igbt). However, it may advantageously be a gate turn off thyristor (gto), thereby combining rapid switch-off capability, high surge current carrying ability, simplicity and minimal power requirements for the driving circuits.

Various modifications may be made to the arrangement just before described without departing from the scope of the invention and for example the electrical power supply may comprise any form of power supply having a plurality of serially connected switching elements, which under normal operating conditions are operated alternately or sequentially, but which under fault conditions can operate contemporaneously to produce a short circuit across a supply. Thus the invention has special application in inverter technology or high power modulators for example.

For some applications, more than one (gto) circuit breaking element may be provided in series or in parallel.

**Claims**

1. Electrical supply apparatus including a plurality of switches serially coupled to a power source said switches being operated alternately or sequentially to supply power from the power source via a supply circuit to a load and a protection circuit which comprises sensing means operative in dependence upon the voltage developed across each of the switches for initiating operation of a circuit breaker which is effective to decouple the apparatus from the power source if the switches are operated contemporaneously so as to short circuit the power source.

2. Apparatus as claimed in claim 1 comprising an inverter or modulator circuit, wherein the power source is a d.c. supply, the said supply circuit including a transformer, a primary winding of which is fed from the d.c. supply via the switches and a secondary winding of which provides an a.c. output voltage from the apparatus.

3. Apparatus as claimed in claim 2 wherein the switches are serially coupled to the power source by inductor means, the apparatus further including capacitors which in combination with the inductor means, form a tuned circuit arrangement having a resonant frequency chosen in accordance with the frequency of operation of the inverter or modulator.

4. Apparatus as claimed in any preceding claim comprising thyristors or similar semiconductor switches having control electrodes fed with switching control pulses from a driver circuit.

5. Apparatus as claimed in claim 4 wherein each thyristor is shunted by a diode the diodes being connected such that their forward current flow direction is opposite to the forward current flow direction through the thyristors shunted.

6. Apparatus as claimed in any preceding claim in which a circuit breaking element of the circuit breaker is a gate turn off thyristor.

7. Apparatus substantially as hereinbefore described with reference to Figure 3 of the accompanying drawings.

Fig.1.

Fig.2.

Fig.3.